(19) **Europäisches Patentamt / European Patent Office / Office européen des brevets**

(11) **EP 2 944 466 B1**

(12) **EUROPEAN PATENT SPECIFICATION**

(45) Date of publication and mention
of the grant of the patent:
**20.12.2017 Bulletin 2017/51**

(51) Int Cl.:
$C08J\ 5/12$ (2006.01)   $B32B\ 27/32$ (2006.01)
$B29C\ 65/08$ (2006.01)   $B29C\ 65/00$ (2006.01)
$B32B\ 27/08$ (2006.01)

(21) Application number: **14167964.7**

(22) Date of filing: **12.05.2014**

(54) **Sealing oriented films**

Dichtungsgerichtete Folien

Films orientés étanchéité

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.11.2015 Bulletin 2015/47**

(73) Proprietor: **Borealis AG
1220 Vienna (AT)**

(72) Inventor: **Aarnio-Winterhof, Minna
4203 Altenberg bei Linz (AT)**

(74) Representative: **Campbell, Neil Boyd
Dehns
St Bride's House
10 Salisbury Square
London
EC4Y 8JD (GB)**

(56) References cited:
**EP-A1- 1 837 162     EP-A1- 2 698 251
EP-A1- 2 730 393     WO-A1-2008/074493**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This invention relates to the sealing of a polyolefinic oriented film to a substrate such as a polyolefinic substrate, in particular to the sealing of machine direction oriented polyolefinic film to a polyolefinic substrate and especially to the use of ultrasonic welding in forming said seal with the substrate. In a further embodiment, the substrate is also a machine direction oriented polyolefinic film.

## Background

Polyolefin films have been used in packaging for many years. Many of these films are oriented films which have been stretched, typically in the machine direction, to provide films ideal for the packaging industry. Oriented films offer a wealth of advantageous properties, due to a change in the morphology of the film's molecular structure such as excellent mechanical properties, impermeability to moisture, high resistance to oils and fats and scratch resistance. These films are often low haze and high gloss and can be printed upon easily.

Machine Direction Oriented (MDO) polyethylene films are, however, very difficult to seal by means of heat sealing. The industry has generally solved this problem by designing complex multilayer film structures and using particular materials in the sealing layers of multilayer films. Still, exposing the highly oriented film to heat easily results in severe shrinkage of the film and rather low seal strength.

Sealing is also a serious problem in more complex film operations such as in form fill and seal technology. In a typical form, fill and seal film sealing operation, the manufacturer has to seal different zones of the film. These zones may comprise 2, 3 or 4 film layers, especially where there are gussets present. Heat sealing the zones where 2 to 4 film thicknesses meet is difficult because the heat applied is often so great that the film can be damaged. If not enough heat is applied, a seal is not formed and the package integrity is at risk or the seal strength poor.

Heat sealing in oriented films is further complicated by film shrinkage. If you apply to much heat the film shrinks, but too little heat and no seal is formed.

For oriented polyolefinic films therefore there are problems in heat sealing which need to be overcome.

The present inventors have realised that a potential solution to this problem is ultrasonic welding. Ultrasonic welding is an alternative sealing technology based on high frequency acoustic vibrations. Ultrasonic welding works by generating a very high voltage and converting that into high frequency vibrations by means of a converter (Piëzo elements).

A film surface to be sealed is exposed to the high frequency vibrations and that leads to interfilm and intermolecular friction between the film surface and the substrate to which the film is to be sealed. Heat is generated by friction in the sealing area and the sealing layer of the film and the substrate are sealed together.

Ultrasonic welding has traditionally been used in non polyolefinic environments. It has been used with laminates typically made of paper, aluminium or high-melting polymer films, such as polyethylene terephthalate. Its use in diaper technology is also known.

The use of ultrasonic welding of polyolefin films has been suggested but in few publications. In EP-A-1837162, a complex multilayer film is sealed using ultrasonic welding.

In EP-A-0332341, HDPE baby bottle liners are described which are stretched in the transverse direction and ultrasonically welded at one end. US2007/0215610 also mentions ultrasonic welding as one sealing option in a complex coextruded film for microwave applications.

JP2009012779 discusses films for bottle labels that can be sealed via ultrasonic welding.

The present inventors have realised that ultrasonic welding offers an ideal solution to the problem of heat sealing in machine direction oriented (MDO) polyolefin film.

The inventors have found that MDO polyethylene films generally seem to withstand the high forces/pressures employed during ultrasonic sealing. The stretched films have remarkably more strength to withstand the "hammering" that occurs during ultrasonic welding and as a result when a sufficient contact is made between the film and a substrate to which the film is being sealed, the resulting welds are strong. Seals can be stronger than those achieved with traditional heat sealing.

The inventors have found that films based on multimodal LLDPEs, ideally prepared using Ziegler Natta catalysis are ideal for ultrasonic welding. These polymers give the best seal quality and highest possible seal strength.

Whilst it has been shown before that multimodal designed Borstar materials with high molecular weight, combined with very low density material are valuable in MDO film production, we now show that films containing these multimodal LLDPEs also show excellent seal strengths (at same film thicknesses) when ultrasonically sealed. The sealed films also have excellent quality, as due to their strength the sealing surface is not so easily pushed away from the seal region.

The use of ultrasonic welding with MDO polyolefin films allows the formation of incredibly high seal strengths, in most cases higher than can be achieved using conventional heat sealing technology.

Moreover due to the nature of the technology (i.e. no contact to hot seal bars) there is hardly any film shrinkage.

The use of ultrasonic welding may allow more exact welding processes to take place and may allow the formation of a smooth weld line. This makes the seal less likely to break and avoids unsightly crinkles or tears. Film sealing can also be effected in the presence of contaminants on the sealing surface.

A further major benefit of the use of ultrasonic welding relates to a saving in raw material costs. When forming a seal between surfaces using conventional heat sealing, the layers may overlap by as much as 10 mm. Much of this overlap is therefore wasted film. With ultrasonic welding this overlap can be reduced to 6 mm. In the context of 2000 packages per hr, that adds up to a significant reduction in wastage. The process of the invention is therefore ideal for the manufacture of mass produced packaging such as heavy duty shipping bags.

The use of ultrasonic welding is therefore a significant leap forward for the MDO polyolefin film producer.

## Summary of Invention

Thus viewed from one aspect the invention provides a process for sealing a machine direction oriented polyethylene film to a substrate, preferably to a polyethylene film substrate, comprising bringing said machine direction oriented polyethylene film and said substrate into contact and subjecting at least a part of the contact area to ultrasound so as to form a seal between said film and said substrate;

wherein said machine direction oriented polyethylene film comprises a multimodal linear low density polyethylene terpolymer comprising ethylene and at least two C3-20 alpha olefin comonomers and has a density of 905 to 940 kg/m$^3$.

Also described is the use of ultrasound in the sealing of a machine direction oriented polyethylene film to a substrate wherein said film comprises a multimodal linear low density polyethylene terpolymer comprising ethylene and at least two C3-20 alpha olefin comonomers and having a density of 905 to 940 kg/m$^3$.

Also described is a process for the packaging of a product, in particular a heat sensitive product, comprising forming a container having an open end from a polyethylene film;

filling said container with said product by dispensing said product through the open end of the container; and

sealing said container by ultrasonically welding the open end to itself wherein the film comprises a multimodal linear low density polyethylene terpolymer comprising ethylene and at least two C3-20 alpha olefin comonomers and having a density of 905 to 940 kg/m$^3$.

## Definitions

The term machine direction oriented means a film or layer of that film has been stretched by at least 3 times its length in the machine direction.

By polyethylene is meant a polymer containing at least 70 wt% of ethylene residues, preferably at least 80 wt% of ethylene residues, preferably at least 85 wt% ethylene residues.

The term LLDPE means linear low density polyethylene and is a term of the art. LLDPE's of the invention have a density in the range 905 to 940 kg/m$^3$.

The term terpolymer is used to imply the presence of ethylene and at least two other C3-20 alpha olefin comonomers. Preferably, there are only two comonomers in a terpolymer. The term multimodal linear low density polyethylene terpolymer will be abbreviated as "terpolymer" herein.

The term copolymer is used to indicate the presence of one or more alpha olefin comonomers to ethylene. The term copolymer encompasses terpolymers therefore. A polymer having a single comonomer is called a binary copolymer herein.

Some LLDPEs of the invention must be obtained using a Ziegler Natta catalyst as opposed to another type of polyethylene catalyst, in particular a metallocene type catalyst. Ziegler Natta catalysts are very well known in this industry and the skilled person is familiar with their use and knows these give different characteristics in the final polymer than polymers obtained using metallocene catalysts.

The term machine direction oriented polyethylene film implies a film in which the film as a whole is oriented in the machine direction or where a layer of the film is oriented in the machine direction. Thus, an MDO layer might be carried on a non MDO substrate. Ideally, the MDO layer present comprises a multimodal polymer of the invention.

The substrate and polyethylene film are brought into contact, i.e. so that at least a part of the film touches at least part of the substrate. Pressure may be applied so ensure good contact between the substrate and film. Similarly, pressure may be applied to close the open end of the container before ultrasound is applied to create the seal.

The term multimodal linear low density polyethylene copolymer of the invention refers to a multimodal linear low density polyethylene copolymer comprising ethylene and at least one C3-20 alpha olefin comonomer and having a density of 905 to 940 kg/m$^3$.

## Detailed Description of Invention

This invention relates to ultrasonic welding of a machine direction oriented (MDO) polyethylene film to a substrate, preferably a substrate which is also a polyethylene film.

The substrate can be the same as or different from the machine direction oriented film but both film and substrate are preferably based on polyethylene polymers. This means therefore that the machine direction oriented film comprises a polyethylene component and that the substrate comprises a polyethylene component.

In the films of the invention, the MDO polyethylene film can be monolayer or multilayer film. If the film is a multilayer film then the multimodal LLDPE terpolymer of the invention must be present in a layer which is stretched. It is preferred if a multimodal LLDPE of the invention is present in a layer which is sealed to the substrate or in a layer adjacent to a layer sealed to the substrate. The other layers of the film can however, contain other polymers as explained in detail below.

The substrate to which the MDO film of the invention is welded is one which preferably contains a polyethylene. Again, the substrate might be monolayer or multilayer film and if it is multilayer film then polyethylene compounds are preferably present in the layer that is sealed to the MDO film.

In a preferred embodiment, the substrate is a machine direction oriented polyethylene film as defined herein for the oriented film. Still more preferably the substrate and oriented film are the same film, i.e. the film is being ultrasonically welded to itself, i.e. an ABC film is welded to form an ABCCBA film.

The substrates of the invention can, in addition to a layer based on a polyethylene polymer, comprise barrier layers such as those based on polyamides, ethylene vinyl alcohol, aluminised layers, ethylene acrylate polymers and so on.

It is generally observed that polymers which have proven to have excellent ultrasonic weld performance are not those which also perform well in conventional heat sealing.

## Terpolymers

The films of the invention comprise a multimodal LLDPE terpolymer comprising at least two C3-20 alpha olefin comonomers and having a density of 905 to 940 kg/m$^3$. Monolayer films should comprise a Ziegler Natta based multimodal LLDPE terpolymer. Multilayer films can comprise a multimodal LLDPE copolymer in the B layer of the film (adjacent a sealing layer) but if a multimodal LLDPE copolymer is present in the sealing layer (A) then it should also be a Ziegler Natta produced multimodal LLDPE copolymer as per the monolayer films.

The MFR$_2$ of the terpolymers of the invention is preferably in the range 0.01 to 20 g/lOmin, e.g. 0.05 to 10 g/lOmin, preferably 0.1 to 6.0 g/lOmin. The MFR$_2$ of the terpolymers of the invention is highly preferably in the range of 0.10 to 5 g/lOmin, such as 0.1 to 2 g/lOmin.

The MFR$_{21}$ of the terpolymers of the invention is preferably in the range 5 to 50 g/lOmin, e.g. 10 to 40 g/lOmin.

The terpolymers of the invention have a density in the range of 905 to 940 kg/m$^3$, preferably 915-940 kg/m$^3$, preferably such as 920 to 940 kg/m$^3$.

The weight average molecular weight Mw of the terpolymers of the invention is preferably no more than 250,000, preferably no more than 200,000, such as 150,000 or less. The minimum value is preferably 50,000. The Mw/Mn of the terpolymers can vary. Preferred Mw/Mn values are 3 or more, such as 6 or more, even 10 or more. Ranges of 3.5 to 40 are envisaged, preferably 8 to 30, such as 8 to 20.

Terpolymer of the invention contain at least two, preferably only two, comonomers. Those comonomers are preferably C3-10 alpha olefin comonomers. Preferably the comonomers are selected from 1-butene, 1-hexene or 1-octene. It is preferred if the comonomers employed are 1-butene and 1-hexene.

The amounts of comonomer present in the terpolymers of the invention can range from 0.5 to 15 wt%, such as 0.5 to 12 wt%, e.g. 1 to 10 wt%.

Alternatively, the overall comonomer content in the terpolymer is preferably 0.3 to 7.0 % by mol, more preferably 0.6 to 4.5 % by mol, more preferably 1.0 to 3.5 % by mol and most preferably 1.2 to 2.8 % by mol. Butene may be present in an amount of 0.1 to 3.0 % by mol, preferably 0.2 to 2.0 % by mol, more preferably 0.3 to 1.5 % by mol and most preferably 0.4 to 1,2 % by mol.

The C6 to C12 alpha olefin may be present in an amount of 0.2 to 4.0 % by mol, preferably 0.4 to 2.5 % by mol, more preferably 0.7 to 2.0 % by mol and most preferably 0.8 to 1,8 % by mol.

The terpolymer is multimodal. A unimodal LLDPE possesses a single peak in its GPC spectrum as it is made in a single stage process.

Usually, a polyethylene composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer, e.g. polyethylene (I), will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer there is by definition a lower molecular weight component (LMW) and a higher molecular weight component (HMW). The LMW component has a lower molecular weight than the higher molecular weight component. In a multimodal polymer of use in this invention at least one of the LMW and HMW components is a copolymer of ethylene containing at least one C3-20 alpha olefin comonomer. Further preferably, at least HMW component is an ethylene copolymer containing at least one C3-20 alpha olefin comonomer such as two comonomers. Further preferably, also the lower molecular weight (LMW) component may be an ethylene copolymer containing at least one C3-20 alpha olefin comonomer. If one of the components is a homopolymer, then LMW is the preferably the homopolymer.

The multimodal polyethylene may comprise other polymer components, e.g. up to 10 % by weight of a well-known polyethylene prepolymer (obtainable from a prepolymerisation step as well known in the art). In case of such prepolymer, the prepolymer component is comprised in one of LMW and HMW components, preferably LMW component, as defined above.

The terpolymer of the invention is preferably bimodal and contains a LMW and HMW component. The LMW component has a lower Mw than the higher Mw component. The Mw difference may be at least 5000 units. Alternatively viewed, the $MFR_2$ of the two components should differ by at least 5 g/10 min with the LMW component having the higher value.

The LMW component of the terpolymer may have $MFR_2$ of at least 50, preferably 50 to 3000 g/10 min, more preferably at least 100 g/10 min. A preferred range of $MFR_2$ of the LMW component is e.g. 110 to 500 g/10 min. The molecular weight of the low molecular weight component should preferably range from 20,000 to 50,000, e.g. 25,000 to 40,000.

It is believed that the high MFR of the LMW component may contribute to good mobility of chains during sealing and hence good seal strengths.

The density of the lower molecular weight component may range from 930 to 980 kg/m$^3$, e.g. 940 to 970 kg/m$^3$, more preferably 945 to 955 kg/m$^3$ in the case of copolymer and 940 to 975 kg/m$^3$, especially 960 to 972 kg/m$^3$ in the case of homopolymer.

The lower molecular weight component forms preferably from 30 to 70 wt%, e.g. 40 to 60% by weight of the terpolymer with the higher molecular weight component forming 70 to 30 wt%, e.g. 60 to 40% by weight.

The higher molecular weight component preferably has a lower $MFR_2$ and a lower density than the lower molecular weight component.

It is most preferred if the terpolymer comprises an ethylene homopolymer component and a terpolymer component, ideally an ethylene, 1-hexene, 1-butene terpolymer component. The LMW component is the homopolymer component and the HMW component is the terpolymer component in this regard.

Alternatively, the multimodal terpolymer might comprise two copolymer fractions as long as there are two comonomers present. For example, the terpolymer might comprise an ethylene butene fraction and an ethylene hexene fraction. In this embodiment the ethylene butene fraction is preferably the lower Mw component. In a further embodiment, the invention comprises an ethylene copolymer fraction and an ethylene terpolymer fraction. For example, the terpolymer may comprise an ethylene butene component (ideally as the LMW component) and an ethylene butene hexene terpolymer fraction. All these options are regarded as terpolymers herein.

The use of an ethylene homopolymer LMW component with a terpolymer HMW component is preferred, ideally a C2/C4/C6 terpolymer.

Polymers meeting the definitions above are known in the art and are available from Borealis and others, e.g. under the Borstar type trade name.

An especially preferred polymer is BorShape™ FX1001 or FX1002 (Borealis AG - Vienna, Austria) or Bor-Shape™ FX1001 (Borealis AG - Vienna, Austria).

**Preparation of Polyethylene**

The terpolymers of the invention can be produced using Ziegler Natta catalysis or single site catalysis (mLLDPE), but are preferably produced using a Ziegler Natta catalyst. Such catalysts are well known in the art. Thus, for the preparation of the polymers of the present invention polymerisation methods well known to the skilled person may be used. As catalyst any ordinary stereospecific Ziegler-Natta catalysts can be used. An essential component in those catalysts are solid catalyst components comprising a titanium compound having at least one titanium-halogen bond, an internal electron donor compound and a magnesium halide in active form as a carrier for both the titanium component and the donor compound. The catalysts may contain - as internal electron donor - compounds selected from ethers, ketones, lactones, compounds containing N, P and/or S atoms and esters of mono and dicarboxylic acids.

Multimodal, e.g. bimodal, polymers are preferably produced by blending each of the components *in-situ* during the polymerisation process thereof (so called in-situ process) in a manner known in the art.

The multimodal copolymers useful in the present invention are preferably obtained by *in-situ* blending in a multistage, i.e. two or more stage, polymerization process including solution, slurry and gas phase process, in any order. Whilst it is possible to use different single site catalysts in each stage of the process, it is preferred if the catalyst employed is the same in both stages.

Ideally therefore, the multimodal polymers of the invention are produced in at least two-stage polymerization using the same catalyst. Thus, for example two slurry reactors or two gas phase reactors, or any combinations thereof, in any order can be employed. Preferably however, the polyethylene is made using a slurry polymerization in a loop reactor followed by a gas phase polymerization in a gas phase reactor.

A loop reactor - gas phase reactor system is well known as Borealis technology, i.e. as a BORSTAR™ reactor system. Such a multistage process is disclosed e.g. in EP517868.

The conditions used in such a process are well known. For slurry reactors, the reaction temperature will generally be in the range 60 to 110°C, e.g. 85-110°C, the reactor pressure will generally be in the range 5 to 80 bar, e.g. 50-65 bar, and the residence time will generally be in the range 0.3 to 5 hours, e.g. 0.5 to 2 hours. The diluent used will generally be an aliphatic hydrocarbon having a boiling point in the range -70 to +100°C, e.g. propane. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a non-reactive gas such as nitrogen or low boiling point hydrocarbons such as propane together with monomer.

A chain-transfer agent, preferably hydrogen, can be added as required to the reactors. A prepolymerisation step may precede the actual polymerisation process.

The polymers of the invention are not themselves new and processes for their manufacture are known. They are also commercially available.

It will be appreciated that both the polyethylene components of the films of the invention may contain standard polymer additives. These typically form less than 5 wt%, such as less than 2 wt% of the polymer material. Additives, such as antioxidants, phosphites, cling additives, pigments, colorants, fillers, anti-static agent, processing aids, clarifiers and the like may also be included in the polymers of the present invention and hence in films formed from them. Films may also contain standard additives such as antiblocking agents, slip agents, mould release agents and so on. These additives are well known in the industry and their use will be familiar to the artisan.

**MDO Film Manufacture**

The films of the invention are blown or cast films manufactured by (co)extrusion and blowing/casting as is well known in the art. The films of the invention are preferably 100 to 600 microns in thickness before orientation, preferably 100 to 400 microns. After orientation, the film of the invention is typically 15 to 200 $\mu$m, more preferably 20 to 150 $\mu$m in thickness. It is especially preferred if the films are 20 to 120 $\mu$m in thickness after orientation, such as 25 to 90 microns.

Films of the invention can be monolayered. If monolayered films are desired, it is preferred if the terpolymer of the invention is the major polymer present. Preferably, it forms at least 50 wt% of the monolayer film. Some monolayer films might comprise at least 75 wt% of terpolymer, or at least 85 wt%. Some monolayer films consist essentially of the terpolymer of the invention. If other polymers are present within the MDO monolayer film, it is preferred if those are LDPE (low density polyethylene) or unimodal LLDPEs or vLDPE (e.g. Queo materials).

LDPE's of use in this regard are homopolymers made in a high pressure process as is known in the art. They have a density of between 905 and 935 kg/m$^3$. The MFR$_2$ of the LDPE is highly preferably in the range of 0.10 to 5.0 g/lOmin, such as 0.1 to 2.0 g/lOmin.

The vLDPE of the invention may have a density of less than 905 kg/m$^3$, such as 860 to 900 kg/m$^3$. These compounds are plastomer type materials.

Unimodal LLDPE's are preferably unimodal metallocene LLDPEs ideally with a single comonomer. The MFR$_2$ of unimodal LLDPE compounds may be in the range 0.01 to 20 g/lOmin, e.g. 0.05 to 10 g/lOmin, preferably 0.1 to 6.0 g/lOmin. The MFR$_2$ is highly preferably in the range of 0.10 to 5 g/10min, such as 0.1 to 2 g/10min.

The unimodal LLDPE may have a density in the range of 905 to 940 kg/m$^3$, preferably 915-935 kg/m$^3$, preferably such as 920 to 930 kg/m$^3$. A metallocene unimodal LLDPE is especially favoured.

There may be 10 to 50 wt% of other polyolefins present in the MDO film, such as 10 to 30 wt% of other polyolefins present.

It is preferred if films of the invention are multilayered. Multilayer films are preferably formed from at least two layers, such as at least three layers, such as 3 layers, 5 layers or 6 layers. Films preferably comprise therefore at least layers A, B and optionally C.

The invention envisages the use of two types of multilayer films, laminated films as described further below in which a layer of the film is MDO stretched and laminated onto a non MDO film and fully MDO multilayer films in which all layers of the films are stretched.

In the fully MDO multilayer films aspect, there should be layers A and B. The (A) layer of the film is preferably an external layer. It is preferably involved in sealing of the film (ideally to itself). Said layer (A) may therefore consist essentially of the multimodal LLDPE of the invention. Alternatively, said layer (A) preferably comprises at least a multimodal terpolymer LLDPE. Ideally, this layer is a blend of that multimodal terpolymer LLDPE with a unimodal LLDPE in particular a metallocene unimodal LLDPE.

These single site LLDPEs impart excellent sealing behaviour to the films. The (A) layer may also be a blend of the multimodal LLDPE component and a very low density polyethylene of density less than 905 kg/m$^3$, such as a plastomer.

Said layer (B) preferably comprises, e.g. consist of a multimodal LLDPE terpolymer of the invention.

Layer (C), if present, preferably comprises the same structure as layer (A). Preferred films of the invention are therefore ABA type films. Alternatively this can be a 3 layer film construction where in the C is blocking layer forming in total a 6 layer film structure ABCCBA, e.g. as decribed below. Blocking layers of interest are based on vLDPE type materials, e.g. at least 50 wt% of such vLDPE polymers, e.g. as described above in reference to the A layer.

### Film layers

The term "consisting essentially of' used below in relation to film layer materials is meant to exclude only the presence of other polyolefin components, preferably other polymers. Thus said term does not exclude the presence of additives, e.g. conventional film additives, i.e. each layer independently may contain conventional film additives such as antioxidants, UV stabilisers, acid scavengers, nucleating agents, anti-blocking agents, slip agents etc as well as polymer processing agent (PPA) and so on.

Multilayer MDO films of the invention preferably comprise layers (A) and (B) below, especially layers (A), (B) and (C) below.

### Layer (A)

Accordingly, in a first preferable embodiment (i) of the invention, said layer (A) comprises a mixture of a multimodal LLDPE copolymer (preferably terpolymer) and unimodal LLDPE or very low density polyethylene. In this embodiment (i) a layer (A) preferably comprises 40-75 wt% of multimodal LLDPE copolymer, more preferably 40 to 70 % of multimodal LLDPE copolymer. Layer (A) of the embodiment (i) preferably comprises 25-60 wt% unimodal LLDPE or very low density polyethylene, more preferably 30-60 wt%. The use of a 70/30 wt% split of multimodal and unimodal LLDPE or very low density polyethylene is especially preferred here. Layer (A) preferably consists essentially of these components.

### Layer (B)

Layer (B) preferably comprises at least 50 wt%, preferably at least 60 wt%, more preferably at least 70 wt% of a multimodal LLDPE terpolymer of the invention. In some embodiments even about 80 wt% or more of multimodal LLDPE terpolymer is preferred. Multimodal LLDPE is preferably a multimodal znLLDPE polymer (i.e. one made using Ziegler Natta catalysis). Preferably said layer (B) consists of a multimodal LLDPE terpolymer(s). It may therefore comprise a blend of two multimodal LLDPE's or a single multimodal LLDPE polymer.

### Layer (C)

Said layer (C) may have a polymer composition as described in relation to layer (A) above. Preferably layers (A) and (C) are identical in a ABA type film structure.

The film thickness distribution (%) of a ABC layer film is preferably 20 to 40%/20-60%/20-40% of the total film thickness (100%).

In a further preferred embodiment, the films of the invention comprise at least five/six layers, preferably in the following order:

(i) a first outer layer (A),
(ii) a second outer layer (B),
(iii) a first inner layer (C),
(iv) a second inner layer (C),
(v) a third outer layer (B) and
(vi) a fourth outer layer (A)

This film is preferably formed from two identical ABC type films and it can be argued that the centre C layers merge to become one (and hence a 5 layer construction). For an ABCCBA film structure the thickness of the layers may conform to 7.5-27.5%/15-35%/5-25%/15-35%/7.5-27.5%, wherein the total film thickness is 100% and the amount of core layer is the sum of two layers (C).

In an ABCCBA structure it is preferred if the (C) layers are not the same as the (A) layers. In particular, the (C) layers can comprise a very low density polyethylene as hereinbefore defined.

Each A, B or C layer may independent have a composition as hereinbefore defined. Ideally, the ABCCBA film is formed from two identical ABC films laminated together via their (C) layers.

It is preferred that the sealing layer forms at least 18% of total thickness of the film, preferably at least 20%, especially at least 25% of the thickness of the film. If the sealing layer is too thin, the sealing properties of the film are poorer.

The films of the invention can possess valuable mechanical properties such as high impact strength, stiffness and planarity i.e. bending stiffness, heat resistance and tensile properties.

Most importantly, the maximum seal force achieved using ultrasonic welding is as good as or better than can be achieved using conventional heat sealing.

In order to manufacture fully MDO films to be sealed according to the invention, normally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well known process.

The film of the invention will typically be produced by extrusion through an annular die, blowing into a tubular film by forming a bubble which is collapsed between nip rollers after solidification. Conventional film production techniques may be used in this regard. Typically, the layers will be extruded at a temperature in the range 160°C to 240°C, and cooled by blowing gas (generally air) at a temperature of 10 to 50°C to provide a frost line height of 2 to 8 times the diameter of the die. The blow up ratio should generally be in the range 2 to 5, preferably 2.5 to 4. Suitable die diameters are in the range 100 to 300 mm or even higher.

The films are then stretched in machine direction to form an oriented film. Stretching is effected to at least 3 times the original film length. Stretching is effected in the machine direction although in theory some transverse direction stretching could also occur. Films can therefore be biaxially oriented. The use of BOPP films is envisaged here.

Biaxially oriented films can be made via two different processes - tubular (bubble) or tenter frame process. Both processes were used early in commercial production of biaxially oriented polypropylene films and both are still used today (Edward P. Moore, Jr., Polypropylene Handbook, Hanser Publishers, 1996, 374 to 375). The tubular frame process is favoured to produce very thin films.

The tenter frame process is more common due to the lower variable costs resulting from very high output and wider availability of the technology than the tubular frame processes.

In the tenter frame process the biaxial orientation of the film is conventionally achieved by drawing the film lengthwise ("machine direction" (MD)) and then, with a tenter, drawing the film in a direction perpendicular to the machine direction ("transverse direction" (TD)).

In machine direction orientation (MDO) the film is running on a heated set of rolls. The temperature of these rolls generally is between 120 to 130°C, but occasionally some lines are using higher temperatures, e.g. fast running lines.

Stretch ratios for oriented film can be up to 10 in the machine direction (MDO), preferably 4 to 8, especially 4 to 6.

Preferably, films are oriented in the machine direction only.

**Laminates**

In a preferred embodiment of the invention the film to be sealed is a laminated film. In the laminated film, an MDO film is laminated to a non MDO film and the combined film is then ultrasonically sealed to a substrate. The MDO film part can be monolayer MDO film as herein described or a multilayer film as herein described. The monolayer or multilayer film is then laminated to a non oriented film such as a blown film. That blown film is ideally a multilayer polyethylene film.

The MDO film being laminated is preferably a monolayer film in which the multimodal copolymer of the invention forms the major part, e.g. at least 50 wt% thereof, such as at least 70 wt% thereof. The monolayer MDO film may contain other components however, such as a vLDPE having a density of less than 905 kg/m$^3$ and/or and LDPE as defined above. It is preferred if the monolayer film used in this aspect has a thickness after stretching of at least 20 microns, e.g. 20 to 80 microns.

The MDO film layer provides the overall laminate with good optical properties, stiffness, puncture resistance and good support for the sealing process, especially in the context of an ultrasonic welding process.

The MDO film is laminated to a second film which is not an MDO film. Preferably, it is a blown film. The film is preferably multilayer comprising at least layers A', B' and C'. The A' layer is the layer which is laminated to the MDO film. The A' layer preferably comprises LDPE as the major component, e.g. at least 50 wt% LDPE, such as 70 wt% LDPE. Suitable LDPE's are as hereinbefore defined. It may also comprise multimodal LLDPE copolymer of the invention, in particular a terpolymer of the invention. If present, that component may form up to 30 wt% of the A' layer, such as up to 20 wt% of the layer. The addition of the copolymer of the invention increases especially the bending stiffness, but also toughness of the laminated film.

The B' layer provides the blown film with strength. The major component of the B' layer should be a multimodal LLDPE copolymer of the invention, e.g. 50 wt% of the B' layer should comprise such a polymer, such as at least 70 wt% of the B' layer. This layer may also comprise LDPE as hereinbefore defined, e.g. up to 20 wt% LDPE. Preferably however, the B' layer consists essentially of the multimodal LLDPE copolymer of the invention. This should ideally be based on a Ziegler Natta polymer. The use of the multimodal copolymer of the invention in the B' layer provides the laminated film with stiffness and strength and provides good support to the film during a packaging process.

The B' layer is directly adjacent the sealing layer C' which is ultrasonically sealed to a substrate. The C' layer is preferably based on a multimodal metallocene LLDPE copolymer. The C' layer might comprise at least 50 wt% of such a polymer, such as at least 75 wt% of such a polymer. In addition, the C' layer might comprise a vLDPE or optionally a Ziegler Natta multimodal LLDPE copolymer of the invention.

The film of this aspect of the invention is ideally ultrasonically sealed to itself to thus form a structure MDO:A':B':C':C':B':A':MDO.

Thus viewed from a further aspect the invention provides a laminated film comprising:

(I) an MDO film comprising at least 50 wt% of a multimodal LLDPE copolymer of the invention;
(II) a non oriented film having three layers A', B' and C' wherein
said A' layer is laminated to said MDO film and comprises at least 50 wt% of LDPE;
said B' layer comprises at least 50 wt% of a Ziegler Natta produced multimodal LLDPE copolymer of the invention; and
said C' layer comprises at least 50 wt% of a metallocene multimodal

LLDPE.

Viewed from another aspect the invention provides a process for sealing a multilayer machine direction oriented polyethylene film to a substrate, preferably to a polyethylene film substrate,
comprising bringing an outer layer of said multilayer polyethylene film and said substrate into contact and subjecting at least a part of the contact area to ultrasound so as to form a seal between said outer layer of said machine direction oriented multilayer film and said substrate;
wherein said machine direction oriented multilayer polyethylene film comprises an outer layer (C), a layer (B) adjacent said outer layer and a MDO layer,
said layer (B) comprising a multimodal linear low density polyethylene copolymer comprising ethylene and at least one C3-20 alpha olefin comonomer and having a density of 905 to 940 kg/m$^3$; and said MDO layer comprising a multimodal linear low density polyethylene copolymer comprising ethylene and at least one C3-20 alpha olefin comonomer and having a density of 905 to 940 kg/m$^3$.

Viewed from another aspect the invention provides ultrasonically sealing a film as defined above to itself to form a structure (I)A'B'C'C'B'A'(I).

The laminated film structure preferably has a thickness of typically of 20 - 120$\mu$m depending on application (weight and size of packed good). It may have a layer distribution (A/B/C) of 10-35% / 30-80% / 10-35%.

The use of this MDO film in the laminated structure might allow the replacement of more conventional support films such as oriented PET. That is important as recycling of laminated films containing polyolefins and PET etc. is remarkably more difficult compared to a monomaterial solution. A film as defined herein in which a multimodal LLDPE is used rather than PET is more readily recyclable.

Improved recycling is an important aspect of the laminated films of the invention.

## Ultrasonic Welding

Once the oriented film and substrate have been prepared a seal needs to be formed between them. This is achieved by ultrasonic welding. In ultrasonic welding heat is generated in the bonding area between the film and substrate by mechanical vibration, causing friction that cause the materials being sealed to plasticize, forging an insoluble connection between the parts.

Ultrasonic welding utilizes a welding tool (the sonotrode) that is typically oriented to apply vibrations horizontally or vertically. Sealing quality is very uniform because the energy transfer and the released internal heat remain constant and are limited to the sealing area.

Because ultrasonic welding has very low energy requirements, uses no consumables, requires no cooling water, and has modest space requirements, ultrasonic welding provides cost-effective, environmentally friendly solutions to the problem of polymer sealing.

The parts to be welded are firstly brought into contact and are sandwiched between a fixed shaped nest (anvil) and a sonotrode connected to a transducer. The frequency of the ultrasound can be tailored to effect a seal in the materials being sealed. At least part of the contact area between the film and substrate is therefore subjected to ultrasound. It will be appreciated that the film and substrate may be in contact with each other over a larger area than is actually sealed just due to the nature of the process.

The necessary ultrasound vibrations might vary depending on the nature of the film being sealed and so on. Typically, ultrasound frequencies in the range of 15 kHz to 70 kHz can be employed.

The time for which the sealing surfaces are exposed to ultrasound can be very short, such as 50 to 200 ms.

The ultrasonic energy melts the point contact between the film and the substrate to which the film is being sealed, creating a seal when the ultrasound is stopped (or the film moved away from the ultrasound source). Ultrasonic welding causes local melting of the plastic due to absorption of vibration energy.

The use of ultrasonic welding is highly advantageous as the film is not contacted with a hot sealing bar. The sonotrode remains cold throughout the process. This therefore prevents accumulation of molten polymer on sealing bar and hence intensive cleaning of that bar after sealing. There is therefore significantly reduced downtime by using ultrasonic welding as opposed to heat sealing.

An excellent seal can still be effected even if there is contamination present. It is common that one of the sealing surfaces might be contacted with the material being packaged contaminating the sealing surface. Despite such contamination a strong seal can still be formed using ultrasonic welding. It appears the application of the ultrasound mechanically removes the contaminant from the sealing area. This is important when the product being packaged is one that gives an odour when heated. For example, if pet food is heat sealed with contaminant on the sealing area, the result is a burnt pet food smell. The use of ultrasonic welding avoids that problem.

A further most important benefit of ultrasonic welding is the avoidance of film shrinkage. In oriented film, shrinkage is an enormous problem as these films have a great tendency to shrink. By avoiding high temperature sealing shrinkage, is minimised. Moreover we avoid exposing the contents of a package to high temperature. That is important if the product is one which degrades readily in heat.

It is preferred that during the ultrasonic welding operation the film does not shrink by more than 5 % in any direction.

The use of ultrasonic welding may allow more flexibility in film design for packaging. For ultrasonic welding hot tack is not an issue as heat flows after sealing into adjacent (colder) film layers. In case of heat sealing, the adjacent layers are hotter than the seal and that limits hot tack. This limits therefore the nature of films which can be used in the heat sealing environment.

This makes the invention ideal for the packaging of heat sensitive products.

The use of ultrasonic welding also allows a reduction in the head space in packaging. Typically a large head space is used to prevent heat from the sealing operation damaging goods packaged. With ultrasonic welding this problem can be overcome and less film per gram of packaged material might be needed.

## Applications

The films of the invention can be employed in a wide variety of end applications however they are of particular interest in the manufacture of packaging, especially food, drink or medical packaging or packaging of goods in medium duty or heavy duty shipping sacks.

In particular the films may be utilised in form, fill and seal packaging technology or in the formation of stand up pouches. It is a particular feature of the invention that the materials described herein can be subjected to ultrasonic welding as well as conventional heat sealing. In particular, ultrasonic welding might be used to seal in the transverse direction whilst heat sealing used for the machine direction.

Preferably, films are sealed within a vertical Form Fill Seal (FFS) packaging line, in which the oriented film is initially welded from the flat film, preferably by ultrasonic welding. The film can then be welded ultrasonically with a first transverse seam, the package filled and closed by means of heat seal or ultrasonic welding.

In a typical FFS machine, the machine is loaded with a continuous flat roll of oriented film. The oriented film approaches the back of a long hollow conical tube, and when the centre of the plastic is near the tube, the outer edges of the film form flaps that wrap around the conical tube. The film is pulled downward around the outside of the tube and a vertical heat-sealing bar clamps onto the edges of the film, bonding the film by melting the seam edges together.

To start the bagging process, a horizontal sealing bar clamps across the bottom edge of the tube, bonding the film together, and cutting off any film below. The sealed tube end is then lowered onto a precision weighing table and the product to be bagged is dispensed through the long conical tube in the centre of the bag. When the gross weight of the product-filled bag is reached, filling stops, and the horizontal sealing bar seals the top of the bag, and simultaneously forms the bottom of the next bag above. This bag is then cut off from the tube and is now a sealed package. There are a number of sealing operations during an FFS process therefore and ultrasonic welding can be used instead of one or more of those heat sealing operations. In particular, the ultrasonic welding replaces any transverse direction heat seal apparatus.

Dual systems are also available for four side sealed packages, as well as packages requiring different materials for each side. Dual systems use two rolls of starting film instead of one, which are fed in from opposite sides of the machine. The bottom and top layers are heat sealed together to form the pouch, and the product is loaded from the top. The pouch with loaded product then advances downwards and the top is sealed and pouch is cut off. The sealing of the top of the pouch forms the bottom of the next pouch.

Again ultrasonic welding can be used to effect one or more of these heat sealing operations.

The films are especially useful in heavy duty shipping sacks or medium duty shipping sacks. To provide strength, heavy duty shipping sacks are often provided with gussets. Where there is a gusset, the film thickness is especially high as there are numerous film folds to seal together. The use of heat sealing in that environment is difficult as the heat required to seal all layers is so high. The use of ultrasonic welding can create a high quality seal independent of the number of layers present.

Stand-up pouches are often made by means of heat sealing. The actual closure of the pouch after filling can be effected by ultrasonic welding. It is a further respect of the invention therefore that the oriented films of the invention can be both heat sealed and ultrasonically welded to a substrate. Where more than one seal is required in a package, both techniques could be used in package formation.

This invention is of particular utility in the formation of heat sensitive products including all types of human food/drinks, pet food, heat sensitive non consumable products and so on.

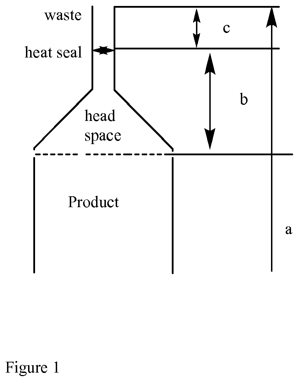

A particular feature of the invention is represented in figure 1. Here a form fill and seal process is depicted in which a is the length of the FFS bag, b is the head space within the bag and c is the welding overhang. Using ultrasonic welding it is envisaged that the values of both b and c can be reduced, perhaps by a combined amount of up to 10%. That might allow a 70 g heavy duty sack to be reduced to a 69 g heavy duty sack. In the context of 400 tonnes of bags per annum, that is an additional 80,000+ bags.

The invention will now be described with reference to the following non limited examples and figure.

**Melt Flow Rate**

The melt flow rate (MFR) is determined according to ISO 1133 and is indicated in g/10 min. The MFR is an indication of the melt viscosity of the polymer. The MFR is determined at 190°C for polyethylene and 230°C for polypropylene. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

**Comonomer Content (NMR):**

The comonomer content was determined by using $^{13}$C -NMR. The $^{13}$C -NMR spectra were recorded on Bruker 400 MHz spectrometer at 130 °C from samples dissolved in 1,2,4-trichlorobenzene/benzene-d6 (90/10 w/w).

**Molecular weight**

$M_w$, $M_n$ and MWD are measured by Gel Permeation Chromatography (GPC) according to the following method:

The weight average molecular weight $M_w$ and the molecular weight distribution (MWD = $M_w/M_n$ wherein $M_n$ is the number average molecular weight and $M_w$ is the weight average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 μL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a blend can be calculated if the molecular weights of its components are known according to:

$$Mw_b = \sum_i w_i \cdot Mw_i$$

where $Mw_b$ is the weight average molecular weight of the blend,
$w_i$ is the weight fraction of component "i" in the blend and
$Mw_i$ is the weight average molecular weight of the component "i".

The number average molecular weight can be calculated using the well-known mixing rule:

$$\frac{1}{Mn_b} = \sum_i \frac{w_i}{Mn_i}$$

where $Mn_b$ is the number average molecular weight of the blend,
$w_i$ is the weight fraction of component "i" in the blend and
$Mn_i$ is the number average molecular weight of the component "i".

**Density**

Density of the polymer was measured according to ISO 1183 / 1872-2B.

**Examples**

Monolayer and coextruded films were coextruded on a 7-layer Alpine coextrusion line with die diameter 300 mm, at a blow up ratio (BUR) of 1:2,5, frost line height 3D and Die gap 1.5 mm. In case of mono films, all 7 layers were the same material and had equal layer distribution (AAAAAAA). Coex structure was extruded with AABBBCC and layer distribution 12/13/16/18/16/13/12%.
The temperature settings on all extruders were 210°C and the temperature setting on the extruder die was 210°C.
Stretching was carried out using a monodirectional stretching machine manufactured by Hosokawa Alpine AG in Augsburg/Germany. The film obtained from blown film extrusion was pulled into the orientation machine then stretched between two sets of nip rollers where the second pair runs at higher speed than the first pair resulting in the desired draw ratio. After exiting the stretching machine the film is fed into a conventional film winder where the film is slit to its desired width and wound to form reels.
The PE film samples used for the determinations of PE film properties as defined in the description were prepared as described above and had starting film thickness of 150 μm before stretching, draw ratio of 1:6, final film thickness of 25 μm after stretching.

US welding conditions:

- Press USP 3000
  Sonotrode no. 9069 (titan)
  Converter SE2010
  Booster 1.5

Anvil R5/90°, stainless steel
- Trials performed at 20kHz,
  amplitude 65μm (peak-peak), pressures 1.5 - 4 bar,
  (corresponds forces 600 - 1800 N)
- Seal length: 20 cm,
- Orientation of the seal: in transverse direction in respect to blown film production.

Tensile testing to evaluate seals:

Parameters:

- Sample width - 15 mm
- Temperature - 23 °C
- Preload - 0,15 N
- Speed preload - 2 mm/min
- Test speed - 200 mm/min
- Clamping distance - 100 mm

The following commercial grades where employed in the examples:

BorShape FX1001 Borealis, Terpolymer of the invention (ZN), MFR5 = 0.9 g/lOmin, density 933 kg/m$^3$
VS4470, Borealis, unimodal HDPE, MFR2 = 0.65 g/lOmin, density 946 kg/m$^3$ FG5190, Borealis, unimodal LLDPE copolymer, MFR2 = 1.2 g/lOmin, density 919 kg/m$^3$
Exceed 1018, Exxon, metallocene unimodal LLDPE copolymer, MFR2 = 1.0 g/lOmin, density 918 kg/m$^3$
Borlite OPE797, Borealis, bimodal LLDPE copolymer, MFR5 = 0.6 g/lOmin, density 935 kg/m$^3$

The comparable coex structure (ABA) in the examples consists of A = 70% VS4470 + 30% Exceed 1018, B = 100% OPE797

Table 1

| MDO film material | Welding time [ms] | Welding pressure [bar] | Comments |
|---|---|---|---|
| FX1001*, 25 μm | 120 | 2.5 / 3.0 | 2.0 bar not enough. Really strong seal |
| VS4470, 25μm | 120 | 3.5 | Minimum pressure 3.5, even 4 ok. weak seal/film. |
| FG5190, 25μm | 120 | 2.0 / 2.5 | Softer material → less pressure. Quality ok. Seal weak. |
| Coex ABA 25μm | 120 | 2.5 | Good. with 3.0 seal starts to burst |

Whilst HDPE (VS4470) MDO film is possible to seal with ultrasonic sealing, the film seal is very weak. A better structure is with bimodal LLDPE (OPE797) as support layer (B) in the coex film structure and to increase the sealing performance Exceed was also added. Nevertheless, table 2 confirms that the seal strength wa still poor compared to FX1001.

| Table 2 | Welding time [ms] | Welding pressure [bar] | Max Force [N] |
|---|---|---|---|
| MDO FX1001*, 25μm | 120 | 3.0 | 18.4 |
| MDO VS4470, 25μm | 120 | 3.5 | 3.6 |
| MDO FG5190, 25μm | 120 | 2.5 | 12.8 |
| MDO coex ABA, 25μm | 120 | 2.5 | 10.0 |
| * of the invention | | | |

The FX1001 MDO film shows far the best performance compared to other PE materials.

## Claims

1. A process for sealing a machine direction oriented polyethylene film to a substrate, preferably to a polyethylene film substrate, comprising bringing said machine direction oriented polyethylene film and said substrate into contact and subjecting at least a part of the contact area to ultrasound so as to form a seal between said film and said substrate; wherein said machine direction oriented polyethylene film comprises a multimodal linear low density polyethylene terpolymer comprising ethylene and at least two C3-20 alpha olefin comonomers and having a density of 905 to 940 $kg/m^3$.

2. A process as claimed in any preceding claim wherein said terpolymer is a multimodal LLDPE produced using a Ziegler Natta catalyst.

3. A process as claimed in any of claims 1 or 2 wherein the terpolymer comprises ethylene and at least two of 1-butene, 1-octene and 1-hexene.

4. A process as claimed in any preceding claim wherein the multimodal LLDPE terpolymer has a density of 930 to 940 $kg/m^3$.

5. A process as claimed in any preceding claim wherein any layer comprising a multimodal linear low density polyethylene terpolymer comprises at least 50 wt% of said polymer.

6. A process for the packaging of a product, in particular a heat sensitive product, comprising providing a container having an open end said container comprising a machine direction oriented polyethylene film; filling said container with said product by dispensing said product through the open end of the container; and sealing said container by ultrasonically welding the open end; wherein said film comprises a multimodal linear low density polyethylene terpolymer comprising ethylene and at least two C3-20 alpha olefin comonomers and having a density of 905 to 940 $kg/m^3$.

7. A process as claimed in any preceding claim in which said multimodal LLDPE terpolymer comprises a lower Mw homopolymer component and a higher Mw terpolymer component or said multimodal LLDPE terpolymer comprises two copolymer fractions as long as there are two comonomers present or said multimodal LLDPE terpolymer comprises an ethylene copolymer fraction and an ethylene terpolymer fraction

## Patentansprüche

1. Ein Verfahren zum dichten Befestigen einer in Maschinenrichtung orientierter Polyethylenfolie an einem Substrat, vorzugsweise einem Polyethylenfoliensubstrat, wobei die in Maschinenrichtung orientierte Polyethylenfolie und das Substrat in Kontakt miteinander gebracht werden und mindestens ein Teil des Kontaktbereichs Ultraschall ausgesetzt wird, um eine Dichtung zwischen der Folie und dem Substrat herzustellen, wobei die in Maschinenrichtung orientierte Polyethylenfolie ein multimodales lineares Poylethylen-Terpolymer niedriger Dichte umfasst, das Ethylen und mindestens zwei C3-20-Alphaolefin-Comonomere umfasst und eine Dichte von 905 bis 940 $kg/m^3$ aufweist.

2. Verfahren nach einem vorhergehenden Anspruch, wobei das Terpolymer ein multimodales LLDPE ist, das unter Anwendung eines Ziegler Natta Katalysators hergestellt wurde.

3. Verfahren nach einem der Ansprüche 1 oder 2, wobei das Terpolymer Ethylen und mindestens zwei von 1-Buten, 1-Octen und 1-Hexen umfasst.

4. Verfahren nach einem vorhergehenden Anspruch, wobei das multimodale LLDPE Terpolymer eine Dichte von 930 bis 940 $kg/m^3$ hat.

5. Verfahren nach einem vorhergehenden Anspruch, wobei jede Schicht, die ein multimodales lineares Polyethylen-Terpolymer niedriger Dichte aufweist, mindestens 50 Gew.-% des Polymers umfasst.

**6.** Verfahren zum Verpacken eines Produkts, insbesondere eines wärmeempfindlichen Produkts, welches das Bereitstellen eines Behälters mit einem offenen Ende umfasst, wobei der Behälter eine in Maschinenrichtung orientierte Polyethylenfolie umfasst;

Füllen des Behälters mit dem Produkt durch Dosieren des Produkts durch das offene Ende des Behälters und Abdichten des Behälters durch Ultraschallschweißen des offenen Endes, wobei die Folie ein multimodales lineares Polyethylenterpolymer niedriger Dichte umfasst, das Ethylen und mindestens zwei C3-20 Alphaolefin-Comonomere umfasst und eine Dichte von 905 bis 940 kg/m$^3$ aufweist.

**7.** Verfahren nach einem vorhergehenden Anspruch, bei dem das multimodale LLDPE Terpolymer eine Homopolymerkomponente mit niedrigerem Molekulargewicht und eine Terpolymerkomponente mit höherem Molekulargewicht umfasst, oder das multimodale LLDPE Terpolymer zwei Copolymerfraktionen umfasst, solange zwei Comonomere vorhanden sind, oder das multimodale LLDPE Terpolymer eine Ethylencopolymerfraktion und eine Ethylenterpolymerfraktion umfasst.

## Revendications

**1.** Procédé pour sceller un film de polyéthylène orienté dans le sens machine machine sur un substrat, de préférence sur un substrat en film de polyéthylène, comprenant la mise en contact dudit film de polyéthylène orienté dans le sens machine et ledit substrat, et soumettre au moins une partie de la zone de contact à des ultrasons de manière à former un joint d'étanchéité entre ledit film et ledit substrat ; dans lequel ledit film de polyéthylène orienté dans le sens machine comprend un terpolymère de polyéthylène basse densité linéaire multimodal comprenant de l'éthylène et au moins deux co-monomères d'alpha-oléfines en C3-20 et ayant une densité de 905 à 940 kg/m$^3$.

**2.** Procédé selon l'une quelconque des revendications précédentes, dans lequel ledit terpolymère est un LLDPE multimodal fabriqué en utilisant un catalyseur Ziegler Natta.

**3.** Procédé selon l'une quelconque des revendications 1 ou 2, dans lequel le terpolymère comprend de l'éthylène et au moins deux composés parmi le 1-butène, le 1-octène et le 1-hexène.

**4.** Procédé selon l'une quelconque des revendications précédentes, dans lequel le terpolymère de LLDPE multimodal présente une densité de 930 à 940 kg/m$^3$.

**5.** Procédé selon l'une quelconque des revendications précédentes, dans lequel une quelconque couche comprenant un terpolymère de polyéthylène linéaire à faible densité multimodal comprend au moins 50% en poids dudit polymère.

**6.** Procédé pour l'emballage d'un produit, en particulier un produit sensible à la chaleur, comprenant la fourniture d'un récipient ayant une extrémité ouverte, ledit récipient comprenant un film de polyéthylene orienté dans le sens machine ;

le remplissage dudit récipient avec ledit produit en versant ledit produit par l'extrémité ouverte du récipient ; et la fermeture étanche dudit récipient par soudage par ultrasons de l'extrémité ouverte ; dans lequel ledit film comprend un terpolymère de polyéthylène linéaire à faible densité multimodal comprenant de l'éthylène et au moins deux co-monomères alpha-oléfiniques en C3-20 et ayant une densité de 905 à 940 kg/m$^3$.

**7.** Procédé selon l'une quelconque des revendications précédentes, dans lequel ledit terpolymère de LLDPE multimodal comprend un composant homopolymère de masse moléculaire moyenne en masse (Mw) basse et un composant de terpolymère de masse moléculaire moyenne en masse (Mw) plus élevée, ou ledit terpolymère de LLDPE multimodal comprend deux fractions de copolymères à condition que deux co-monomères soient présents, ou ledit terpolymère de LLDPE multimodal comprend une fraction de copolymère d'éthylène et une fraction de terpolymère d'éthylène.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1837162 A
- EP 0332341 A
- US 20070215610 A
- JP 2009012779 B
- EP 517868 A